# EUROPEAN PATENT SPECIFICATION

(11) **EP 2 869 584 B1**
(45) Date of publication and mention of the grant of the patent: **08.03.2017**
(21) Application number: 14816093.0
(22) Date of filing: 16.01.2014
(51) Int. Cl.: H04N 21/4227, H04N 21/43, H04N 21/4415, H04N 21/475, H04N 21/41, H04N 21/441, H04N 21/442

(54) **METHOD AND DEVICE FOR REALIZING DISTRIBUTED REMOTE CONTROL, AND TELEVISION TERMINAL AND MOBILE TERMINAL THEREOF**
VERFAHREN UND VORRICHTUNG ZUR DURCHFÜHRUNG EINER VERTEILTEN FERNSTEUERUNG UND FERNSEHGERÄT SOWIE MOBILES ENDGERÄT DAFÜR
PROCÉDÉ ET DISPOSITIF POUR RÉALISER UNE COMMANDE À DISTANCE DISTRIBUÉE, ET TERMINAL DE TÉLÉVISION ET TERMINAL MOBILE ASSOCIÉ

(30) Priority: 06.08.2013 CN 201310339800
(43) Date of publication of application: 06.05.2015
(73) Proprietor: Shenzhen TCL New Technology Co., LTD, Shenzhen, Guangdong 518052 (CN)
(72) Inventor: WEI, Zeyin, Shenzhen Guangdong 518052 (CN); WANG, Lingchen, Shenzhen Guangdong 518052 (CN)
(74) Representative: Kuhnen & Wacker
(86) International application number: PCT/CN2014/070740
(87) International publication number: WO 2015/018185

(56) References cited:
- CN-A- 101 764 920
- CN-A- 102 769 724
- CN-A- 103 442 280
- CN-U- 202 563 671
- US-A1- 2009 052 859
- US-A1- 2009 133 051
- US-A1- 2011 138 416
- US-A1- 2012 117 600
- US-A1- 2013 027 613
- US-B1- 7 131 132

## Description

### BACKGROUND

### 1. Technical Field

The present disclosure relates to televisions, and particularly, to a method and a device for realizing distributed remote control, and a television and a mobile terminal of the device.

### 2. Description of Related Art

With the development of smart televisions and other smart consumer electronic devices, a large amount of user information and data, including media files stored by users and real-time content streams of different kinds of video output devices such as a set top box, a game machine, and a blue DVD may appear in the family. The user may desire a system which can store and manage the data, such that the user may browse, edit, and share the data on a uniform operation interface. In families, televisions are typically the largest common display screen, thus, a family cloud with the television as the usage center is inevitably generated.

For real-time family content streams, the television is an access center. Various kinds of video devices are accessed to the television and are not required for movement after being arranged. The real-time content streams can be shared with other devices with screens including other televisions or mobile phones or tablets through the video streams sharing function of the family cloud of the television. However, following problems may occur in this application scene: how to remotely control the devices which produce the contents on the devices sharing the content streams, and how to realize the distributed system which can realize the synchronization of the time control in different spaces? Therefore, the existed technology needs to be improved to overcome these problems.

US 2013/027613 A1 discloses a method for operating a display apparatus, wherein a login input is received from a portable terminal, which is capable of controlling the display apparatus.

US 2009/052859 A1 discloses a method for monitoring user occupancy within a space in which a video display is viewable.

### SUMMARY

The main purpose of the invention is to provide a method and a system for realizing distributed remote control, and a television and a mobile terminal of the system aiming to realize the remote control request to the device providing contents from a user sharing real-time contents of the television in different spaces, and to realize the time domain synchronization of the remote control in space.

The present invention is defined by the appended claims.

In the method and system for realizing distributed remote control and the television and mobile terminal of the present disclosure, corresponding responding signal is sent to the mobile terminal according to the user response and according to whether there is any user in front of the television, which realizes the time domain synchronization of the remote control in space and thus realizes the remote control to the device providing real-time contents from the user sharing the real-time contents of the television in different spaces.

### DESCRIPTION OF THE DRAWINGS

FIG. 1 is a schematic view of a device for realizing distributed remote control in accordance with an embodiment of the present disclosure;
FIG. 2 is a flow chart of a method for realizing distributed remote control in accordance with an embodiment of the present disclosure; and
FIG. 3 is a detailed flow chart of a step D of the method of FIG. 2.

The realization of the object, features, and advantages of the present disclosure are given in further detail in combination with the embodiments with reference to the accompanying drawings.

### DETAILED DESCRIPTION

It should be understood that the embodiments described herein are only used to explain the present disclosure rather than to limit the present disclosure.

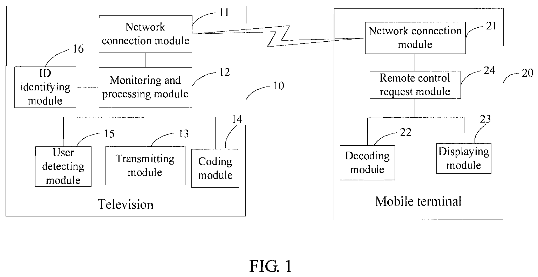

As shown in FIGS. 1 to 3, a device for realizing distributed remote control in accordance with an embodiment includes a television 10 and a mobile terminal 20 which builds a network connection with the television 10.

The television is configured to: send real-time content signals to the mobile terminal 20 and monitor a remote control request from the mobile terminal 20; receive the remote control request sent from the mobile terminal 20 and send a corresponding responding signal to the mobile terminal 20 according to a user response and according to whether there is any user in front of the television 10, wherein the responding signal includes a refuse signal (S_REFUSE), a free signal (S_FREE), and a busy signal (S_BUSY); send corresponding remote control code to a device providing real-time contents after sending the free signal to the mobile terminal 20; and send a remote control permitting signal or a remote control refusing signal to the mobile terminal 20 after receiving a control right applying signal sent by the mobile terminal 20.

The television 10 is further configured to: output a prompt box allowing the user to choose whether to refuse the remote control request after receiving the remote control request signal from the mobile terminal 20. When the user chooses to refuse the remote control request, the television 10 is configured to send the refuse signal (S_REFUSE) to the mobile terminal 20. When the user does not respond to the outputted box, the television 10 is configured to detect whether there is at least one user in front of the television 10 watching the television 10; when no users are detected watching the television 10, the television 10 sends the free signal (S_FREE) to the mobile terminal 20; when there is at least one user being detected watching the television 10, the television 10 sends the busy signal (S_BUSY) to the mobile terminal 20 and sends an image of the user in front of the television 10 to a video main window of the mobile terminal 20 for displaying. In order to facilitate the operation of the mobile terminal 20, suspended display is preferable.

The mobile terminal 20 is configured to: obtain a real-time video program and send the remote control request signal to the television 10; end the current remote control request process after receiving the refuse signal; end the current remote control request process after receiving the free signal and enter a free remote control mode; send the control right applying signal to the television 10 after receiving the busy signal; enter the free remote control mode after receiving the remote control permitting signal; and end the current remote control request process after receiving the remote control refusing signal.

The free remote control mode means that, the mobile terminal 20 is capable of, after the mobile terminal 20 gets the permission from the television 10, sending the remote control signal to the television 10 freely without confirmation from the user in front of the television 10. The television 10 transmits the remote control signal through an infrared (IR) transmitting module thereof to a device providing real-time contents such as a set top box, thereby remotely controlling the device providing real-time contents.

The television 10 includes a network connection module 11, a monitoring and processing module 12, an IR (infrared) transmitting module 13, a coding module 14, a user detecting module 15, and an ID (identification) identifying module 16.

The network connection module 11 is configured to build a network connection with the mobile terminal 20 to exchange data with the mobile terminal 20, and communicate with the monitoring and processing module 12 such that the network connection module 11 can receive a command from the monitoring and processing module 12 and can send a command to the monitoring and processing module 12. The network connection module 11 can be connected with the mobile terminal 20 through Internet, Mobile Internet such as 3G or 4G, Bluetooth, or Wi-Fi.

The monitoring and processing module 12 is configured to monitor the remote control request from the mobile terminal 20; generate the corresponding responding signal according to the user response from the television 10 and according to whether there is any user in front of the television after receiving the remote control request signal from the mobile terminal 20; send the responding signal to the mobile terminal 20 through the network connection module 11, wherein the responding signal includes the refuse signal, the free signal, and the busy signal; and build the free remote control connection with the mobile terminal 20 when no users are watching the television 10 and when the user allows the mobile terminal 20 to control the television 10.

The IR transmitting module 13 includes an IR emitting tube for sending IR commands to the device providing real-time contents such as a set top box.

The coding module 14 includes a video coder (such as H264, MJPEG, MPEG4) and an audio coder (such as mp3 and AAC) configured to code video streams and audio streams input by the device providing real-time contents to compressed binary data streams to form real-time content signals, and provide the real-time content signals to the mobile terminal 20 through the network connection module 11.

The user detecting module 15 is configured to collect a group of images in front of the television 10 when receiving the command from the monitoring and processing module 12, determine whether there is any user watching the television in the group of images according to the group of images, and output an analyzing result to the monitoring and processing module 12.

The user detecting module 15 includes a camera, a collecting unit, an image post-processing unit, and a face identifying unit. The collecting unit is configured to control the camera to collect the group of images in front of the television 10. The image post-processing unit is configured to post-process the collected images. The face identifying unit is configured to perform face identification to the post-processed images to determine whether there is any user in the images watching the television, and output the analyzing result to the monitoring and processing module 12 in a Boolean value (TRUSE/FALSE).

The ID identifying module 16 includes a HDMI CEC communicating device and an ID database. The ID identifying module 16 is configured to obtain an ID of the device providing real-time contents through the HDMI CEC communicating device such as the ID of a DVD, a set top box, and a game machine. The ID identifying module 16 is further configured to resolve the controlling original code corresponding to the remote control request signal sent by the mobile terminal 20 from the ID of the device providing real-time contents, for example, resolve the controlling original code CH+OXff001e1e from the remote control request signal 0X0010 sent by the mobile terminal 20, and send the controlling original code to the device providing real-time contents through the IR transmitting module 13.

The monitoring and processing module 12 is further configured to, after receiving the remote control request signal sent from the mobile terminal 20, output the prompt box allowing the user to choose whether to refuse the remote control request; and configured to output a selection box allowing the user to choose whether to permit the remote control request after receiving the control right applying signal.

The mobile terminal 20 includes a network connection module 21, a decoding module 22, a displaying module 23, and a remote control request module 24.

The mobile terminal 20 can be any terminal with network connecting function, displaying function and remote control command inputting function, such as a mobile phone or a tablet computer.

The network connection module 21 is configured to build a network connection with the television 10 to exchange data with the television 10, communicate with the remote control request module 24 to receive a command from the remote control request module 24 and to send a command to the remote control request module 24. The network connection module 21 can be connected with the television through Internet, Mobile Internet such as 3G or 4G, Bluetooth, or Wi-Fi.

The decoding module 22 includes a video decoder and an audio decoder for decoding the obtained video streams and audio streams from the television 10, and sending the decoded video streams and audio streams to the displaying module 23 for displaying.

The displaying module 23 is configured to play or display the video streams and audio streams decoded by the decoding module 22.

The remote control request module 24 is configured to send the remote control request signal to the television 10 after obtaining the real-time video program of the television 10; end the current remote control request process after receiving the refuse signal from the television 10; end the current remote control request process and build the free remote control connection with the television after receiving the free signal; send the control right applying signal to the television 10 after receiving the busy signal; build the free remote control connection with the television after receiving the remote control permitting signal; and end the current remote control request process after receiving the remote control refusing signal.

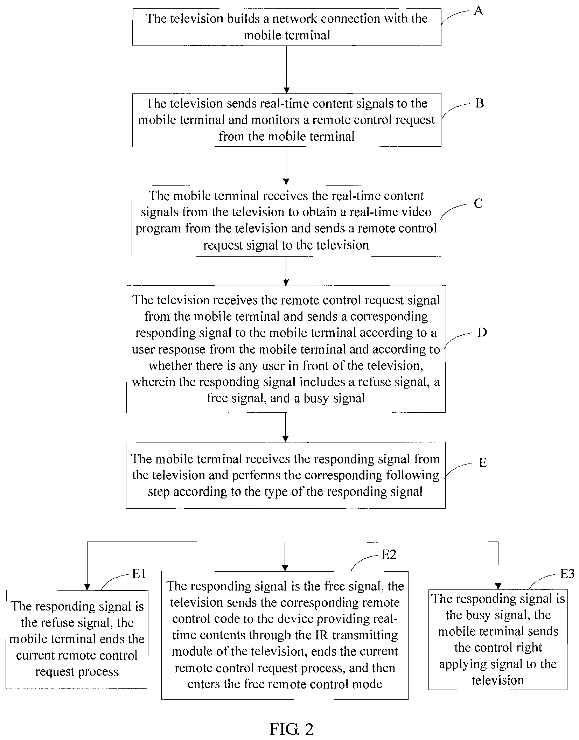

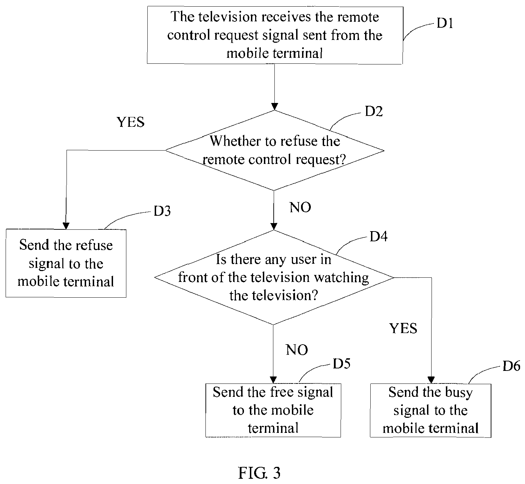

Referring to FIGS. 2 and 3, in combination with FIG. 1, the method for realizing distributed remote control provided in an embodiment includes steps as follows.

Step A, the television 10 builds a network connection with the mobile terminal 20.

The television 10 can be connected with the mobile terminal 20 through Internet, Mobile Internet such as 3G or 4G, Bluetooth, or Wi-Fi, thus, data can be exchanged between the television 10 and the mobile terminal 20.

Step B, the television sends real-time content signals to the mobile terminal 20 and monitors a remote control request from the mobile terminal 20.

The television 10 sends the real-time content signals to the mobile terminal 20 by starting a video information source transmitting program; and the television 10 monitors the remote control request from the mobile terminal 20 by starting a remote control request monitoring program.

Step C, the mobile terminal 20 receives the real-time content signals from the television 10 to obtain a real-time video program from the television 10 and sends a remote control request signal to the television 10.

The mobile terminal 20 receives the real-time content signals from the television 10 by starting a real-time content starting program, sends the remote control request signal to the television 10 by starting a remote control input module, and then waits for the response from the television 10. For example, the mobile terminal 20 sends the remote control request signal with the remote control code 0X0010 which represents that the device providing the real-time contents under the current information source needs to perform the "CH+" operation.

Step D, the television 10 receives the remote control request signal from the mobile terminal 20 and sends a corresponding responding signal according to a user response from the mobile terminal 10 and according to whether there is any user in front of the television 10. The responding signal includes a refuse signal (S_REFUSE), a free signal (S_FREE), and a busy signal (S_BUSY).

Referring to FIG. 3, the step D includes the following steps:
step D1, the television 10 receives the remote control request signal sent from the mobile terminal 20;
step D2, the television 10 outputs a prompt box allowing the user to choose whether to refuse the remote control request, if the user chooses to refuse the remote control request, performing step D3, if the user does not choose to refuse the remote control request, performing step D4;
step D3, the television 10 sends the refuse signal (S_REFUSE) to the mobile terminal 20;
step D4, the television 10 detects whether there is any user in front of the television watching the television, if no users are detected watching the television 10, performing step D5, if there is at least one user being detected watching the television, performing step D6;
step D5, the television 10 sends the free signal (S_FREE) to the mobile terminal 20; and
step D6, the television 10 sends the busy signal (S_BUSY) to the mobile terminal 20.

The television 10 detects whether there is any user in front of the television watching the television by image recognization, and the step that the television 10 detects whether there is any user in front of the television watching the television 10 includes: the television 10 starts the user detecting module 15, collects a group of images in front of the television 10, processes the group of images, and performs face identification to determine whether there is any user in the group of images watching the television.

If the user does not choose to refuse the remote control request, a timer is started; if no operations from the user are received after a predetermined period, determining that the user does not choose to refuse the remote control request.

Step E, the mobile terminal 20 receives the responding signal from the television 10 and performs the corresponding following step according to the type of the responding signal.

Step E1, if the responding signal is the refuse signal (S_REFUSE) which indicates that the television 10 refuses the remote control request directly, the mobile terminal 20 ends the current remote control request process.

Step E2, if the responding signal is the free signal (S_FREE) which indicates that no users are watching the television, the television 10 sends the corresponding remote control code to the device providing real-time contents through the IR transmitting module 13 of the television 10, ends the current remote control request process, and then enters the free remote control mode.

The step that the television 10 sends the corresponding remote control code to the device providing real-time contents through the IR transmitting module 13 includes: the television 10 obtains an ID of the device providing real-time contents through the ID identifying module 16, resolves the controlling original code corresponding to the remote control request signal sent by the mobile terminal from the ID of the device providing real-time contents, and sends the controlling original code to the device providing real-time contents through the IR transmitting module 13. For example, the television 10 resolves the controlling original code CH+0Xff001e1e sent by the mobile terminal 20 from the remote control request signal 0X0010, and sends the controlling original code to the device providing real-time contents through the IR transmitting module 13.

Step E3, if the responding signal is the busy signal (S_BUSY) which indicates that there is at least one user in front of the television 10, the mobile terminal 20 sends the control right applying signal to the television 10; if the television 10 sends the remote control permitting signal to the mobile terminal 20, the mobile terminal 20 enters the free remote control mode; if the television 10 sends the remote control refusing signal to the mobile terminal 20, the mobile terminal 20 ends the current remote control request process.

The step E3 is detailed as follows:
if the responding signal is the busy signal (S_BUSY) which indicates that there is at least one user in front of the television 10 watching the television, the television 10 sends the image of the user in front of the television 10 to the video main window of the mobile terminal 20 for displaying;
the mobile terminal 20 sends the control right applying signal to the television 10 and waits for the response from the television 10; and
after receiving the control right applying signal, the television outputs a selection box allowing the user to choose whether to permit the remote control; if the user chooses to permit the remote control, the television 10 sends the remote control permitting signal to the mobile terminal 20, and the mobile terminal 20 enters the free remote control mode after obtaining the remote control permitting signal from the television 10; if the user chooses not to permit the remote control, the television 10 sends the remote control refusing signal to the mobile terminal 20, and the mobile terminal 20 ends the current remote control request process after obtaining the remote control refusing signal from the television 10.

In the step that the mobile terminal 20 sends the control right applying signal to the television, the control right applying signal can be sent to the television 10 by clicking the control button of the video main window of the mobile terminal 20.

In the method and device for realizing distributed remote control of the present disclosure, corresponding responding signal is sent to the mobile terminal 20 according to the user response and according to whether there is any user in front of the television, which realizes the time domain synchronization of the remote control in space and thus realizes the remote control to the device providing real-time contents from the user sharing the real-time contents of the television in different spaces.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A method for realizing remote control, comprising following steps:
step A, a television building a network connection with a mobile terminal;
step B, the television sending real-time content signals to the mobile terminal and monitoring a remote control request from the mobile terminal;
step C, the mobile terminal receiving the real-time content signals sent from the television to obtain a real-time video program from the television, and sending a remote control request signal to the television;
step D, the television receiving the remote control request signal sent from the mobile terminal and sending a corresponding responding signal according to a user response from the television and according to whether there is any user in front of the television, wherein the responding signal comprises one of a refuse signal, a free signal, and a busy signal; and
step E, the mobile terminal receiving the responding signal from the television and performing a corresponding following step according to a type of the responding signal:
step E1, if the responding signal is the refuse signal which indicates that the television refuses the remote control request directly, the mobile terminal ending the current remote control request process;
step E2, if the responding signal is the free signal which indicates that no users are watching the television, the television sending a remote control code corresponding to the remote control request to a device providing real-time contents through an IR transmitting module of the television, ending the current remote control request process, and then entering a free remote control mode; and
step E3, if the responding signal is the busy signal which indicates that there is at least one user watching the television, the mobile terminal sending a control right applying signal to the television; if the television sending a remote control permitting signal to the mobile terminal, the mobile terminal entering the free remote control mode; if the television sending the remote control refusing signal to the mobile terminal, the mobile terminal ending the current remote control request process.

2. The method of claim 1, wherein the step D comprises following steps:
step D1, the television receiving the remote control request signal sent from the mobile terminal;
step D2, the television outputting a prompt box allowing a user to choose whether to refuse the remote control request, if the user chooses to refuse the remote control request, performing step D3, if the user does not choose to refuse the remote control request, performing step D4;
step D3, the television sending the refuse signal to the mobile terminal;
step D4, the television detecting whether there is any user in front of the television watching the television, if no users are detected watching the television, performing step D5, if there is at least one user being detected watching the television, performing step D6;
step D5, the television sending the free signal to the mobile terminal; and
step D6, the television sending the busy signal to the mobile terminal.

3. The method of claim 2, wherein the step of detecting whether there is any user in front of the television watching the television comprises: the television starting a user detecting module, collecting a group of images in front of the television, post-processing the group of images, and performing face identification to determine whether there is any user watching the television in the group of images.

4. The method of claim 1, wherein the step of transmitting corresponding remote control code to a device providing real-time contents through an IR transmitting module of the television comprises: the television obtaining an ID of the device providing real-time contents through an ID identifying module, resolving controlling original code corresponding to the remote control request signal sent by the mobile terminal from the ID of the device providing real-time contents, and sending the controlling original code to the device providing real-time contents through the IR transmitting module.

5. The method of claim 1, wherein the step E3 comprises:
if the responding signal is the busy signal which indicates that there is at least one user in front of the television watching the television, the television sending an image of a user in front of the television to the video main window of the mobile terminal for displaying;
the mobile terminal sending the control right applying signal to the television and waiting for a response from the television; and
after receiving the control right applying signal, the television outputting a selection box allowing a user to choose whether to permit the remote control; if the user chooses to permit the remote control, the television sending the remote control permitting signal to the mobile terminal, and the mobile terminal entering the free remote control mode after obtaining the remote control permitting signal from the television; if the user chooses not to permit the remote control, the television sending the remote control refusing signal to the mobile terminal and the mobile terminal ending the current remote control request process after obtaining the remote control refusing signal from the television.

6. A system for realizing distributed remote control, comprising a television and a mobile terminal building a network connection with the television;
the television is configured to: send real-time content signals to the mobile terminal and monitor a remote control request from the mobile terminal; receive a remote control request signal sent from the mobile terminal and send a responding signal to the mobile terminal according to a user response and according to whether there is any user in front of the television, wherein the responding signal comprises one of a refuse signal, a free signal and a busy signal; wherein the refuse signal indicates that the television refuses the remote control request directly, the free signal indicates that no users are watching the television, and the busy signal indicates that there is at least one user watching the television; send a remote control code corresponding to the remote control request to a device providing real-time contents after sending the free signal to the mobile terminal; and send a remote control permitting signal or a remote control refusing signal to the mobile terminal after receiving a control right applying signal from the mobile terminal;
the mobile terminal is configured to: receive the real-time content signals sent from the television to obtain a real-time video program and send the remote control request signal to the television; end the current remote control request process after receiving the refuse signal; end the current remote control request process after receiving the free signal and enter a free remote control mode; send the control right applying signal to the television after receiving the free signal; enter the free remote control mode after receiving the remote control permitting signal; and end the current remote control request process after receiving the remote control refusing signal.

7. The system of claim 6, wherein the television is further configured to: output a prompt box allowing a user to choose whether to refuse the remote control request after receiving the remote control request signal from the mobile terminal; send the refuse signal to the mobile terminal when the user chooses to refuse the remote control request; detect whether there is at least one user in front of the television when the user does not choose to refuse the remote control request, send the free signal to the mobile terminal when no users are detected watching the television; send the busy signal to the mobile terminal and send an image of a user in front of the television to a video main window of the mobile terminal for displaying when there is at least one user being detected watching the television.

8. The system of claim 7, wherein the television detects whether there is any user in the group of images watching the television by starting an user detecting module, collecting a group of images in front of the television, post-processing the group of images, and performing face identification to determine whether there is any user watching the television in the group of images.

9. The system of claim 6, wherein the television obtains an ID of the device providing real-time contents through the ID identifying module, resolves controlling original code corresponding to the remote control request signal sent by the mobile terminal from the ID of the device providing real-time contents, and sends the controlling original code to the device providing real-time contents through an IR transmitting module.

10. The system of claim 6, wherein the television is further configured to send an image of a user in front of the television to the video main window of the mobile terminal for displaying and/or to output a selection box allowing a user to choose whether to permit the remote control after receiving a control right applying signal from the mobile terminal, and send a remote control permitting signal or a remote control refusing signal to the mobile terminal after receiving a responding signal from the selection box according to selection of the user.

11. A television adapted in the system for realizing distributed remote control of claim 6,
wherein the television comprises a network connection module, a monitoring and processing module, an IR transmitting module, and a coding module;
the network connection module is configured to build a network connection with a mobile terminal for exchanging data with the mobile terminal, communicate with the monitoring and processing module, and receive and send a command from the monitoring and processing module;
the monitoring and processing module is configured to monitor the remote control request from the mobile terminal; after receiving the remote control request signal from the mobile terminal, generate the corresponding responding signal according to a user response from the television and according to whether there is any user in front of the television, and further send the responding signal to the mobile terminal through the network connection module, wherein the responding signal comprises one of the refuse signal, the free signal, and the busy signal; build a free remote control connection with the mobile terminal when no users are watching the television and when the user allows the mobile terminal to control the television;
the IR transmitting module is configured to send an infrared code command to the device providing real-time contents; and
the coding module is configured to coding video streams and audio streams input by the device providing real-time contents to compressed binary data streams to form real-time content signals, and provide the real-time content signals to the mobile terminal through the network connection module.

12. The television of claim 11, wherein the monitoring and processing module is further configured to output a prompt box allowing a user to choose whether to refuse the remote control request after receiving the remote control request signal sent from the mobile terminal, and to output a selection box allowing a user to choose whether to permit the remote control after receiving the control right applying signal.

13. The television of claim 11, wherein the television further comprises a user detecting module; the detecting module is configured to collect a group of images in front of the television when receiving the command from the monitoring and processing module, determine whether there is any user watching the television in the group of images according to the group of images, and output an analyzing result to the monitoring and processing module, in particular wherein the television further comprises an ID identifying module; the ID identifying module is configured to obtain an ID of the device providing real-time contents, resolve the controlling original code corresponding to the remote control request signal sent by the mobile terminal from the ID of the device providing real-time contents, and send the controlling original code to the device providing real-time contents through the IR transmitting module.

14. The television of claim 11, wherein the television further comprises an ID identifying module, the ID identifying module is configured to obtain an ID of the device providing real-time contents, resolve controlling original code corresponding to the remote control request signal sent by the mobile terminal from the ID of the device providing real-time contents, and send the controlling original code to the device providing real-time contents through the IR transmitting module.

15. A mobile terminal adapted in the system for realizing distributed remote control of claim 6, wherein the mobile terminal comprises a network connection module, a decoding module, a displaying module, and a remote control request module;
the network connection module is configured to build a network connection with a television to exchange data with the television, and communicate with the remote control request module to receive a command from the remote control request module and to send a command to the remote control request module;
the decoding module is configured to decode the obtained video streams and audio streams from the television, and send the decoded video streams and audio streams to the displaying module for displaying;
the displaying module is configured to play or display the video streams and audio streams decoded by the decoding module;
the remote control request module is configured to send the remote control request signal to the television after obtaining the real-time video program of the television; end the current remote control request process after receiving the refuse signal from the television; end the current remote control request process and build a free remote control connection with the television after receiving the free signal; send the control right applying signal to the television after receiving the busy signal; build the free remote control connection with the television after receiving the remote control permitting signal; and end the current remote control request process after receiving the remote control refusing signal.

## Patentansprüche

1. Verfahren zum Umsetzen einer Fernsteuerung, aufweisend die folgenden Schritte:
Schritt A, ein Fernseher stellt eine Netzwerkverbindung mit einem mobilen Endgerät her;
Schritt B, der Fernseher sendet Echtzeit-Inhaltssignale an das mobile Endgerät und überwacht eine Fernsteuerungsanfrage von dem mobilen Endgerät;
Schritt C, das mobile Endgerät empfängt die Echtzeit-Inhaltssignale, die von dem Fernseher gesendet wurden, um ein Echtzeit-Videoprogramm von dem Fernseher zu erhalten, und sendet ein Fernsteuerungs-Anfragesignal an den Fernseher;
Schritt D, der Fernseher empfängt das Fernsteuerungs-Anfragesignal, das von dem mobilen Endgerät gesendet wurde und sendet ein entsprechendes Antwortsignal in Übereinstimmung mit einer Benutzerantwort von dem Fernseher und in Übereinstimmung damit, ob sich ein Benutzer vor dem Fernseher befindet, wobei das Antwortsignal eines von einem Verweigerungssignal, einem Freisignal und einem Besetztsignal aufweist; und
Schritt E, das mobile Endgerät empfängt das Antwortsignal von dem Fernseher und führt einen entsprechenden folgenden Schritt nach einer Art des Antwortsignals durch;
Schritt E1, falls es sich bei dem Antwortsignal um das Verweigerungssignal handelt, das anzeigt, dass der Fernseher die Fernsteuerungsanfrage direkt verweigert, beendet das mobile Endgerät den gegenwärtigen Fernsteuerungs-Anfragevorgang;
Schritt E2, falls es sich bei dem Antwortsignal um das Freisignal handelt, das anzeigt, dass keine Benutzer fernsehen, sendet der Fernseher einen Fernsteuerungscode, der der Fernsteuerungsanfrage entspricht, an eine Vorrichtung, die Echtzeitinhalte durch ein IR-Übertragungsmodul des Fernsehers zur Verfügung stellt, beendet den gegenwärtigen Fernsteuerungs-Anfragevorgang und tritt dann in einen freien Fernsteuerungsmodus ein; und
Schritt E3, falls es sich bei dem Antwortsignal um das Besetztsignal handelt, das anzeigt, dass zumindest ein Benutzer fernsieht, sendet das mobile Endgerät ein Steuerungsrecht-Anwendungssignal an den Fernseher; falls der Fernseher ein Fernsteuerungs-Erlaubnissignal an das mobile Endgerät sendet, tritt das mobile Endgerät in den freien Fernsteuerungsmodus ein; falls der Fernseher das Fernsteuerungs-Verweigerungssignal an das mobile Endgerät sendet, beendet das mobile Endgerät den gegenwärtigen Fernsteuerungs-Anfragevorgang.

2. Verfahren nach Anspruch 1, wobei Schritt D die folgenden Schritte aufweist:
Schritt D1, der Fernseher empfängt das Fernsteuerungs-Anfragesignal, das von dem mobilen Endgerät gesendet wurde;
Schritt D2, der Fernseher zeigt eine Eingabeaufforderung an, die es einem Benutzer ermöglicht, zu wählen, ob er die Fernsteuerungsanfrage zurückweisen will, falls der Benutzer sich entscheidet, die Fernsteuerungsanfrage zurückzuweisen, wird Schritt D3 durchgeführt, falls der Benutzer sich nicht entscheidet, die Fernsteuerungsanfrage zurückzuweisen, wird Schritt D4 durchgeführt;
Schritt D3, der Fernseher sendet das Verweigerungssignal an das mobile Endgerät; Schritt D4, der Fernseher erfasst, ob sich ein Benutzer vor dem Fernseher befindet und fernsieht, falls keine Benutzer erfasst werden, die fernsehen, wird Schritt D5 durchgerührt, falls zumindest ein Benutzer erfasst wird, der fernsieht, wird Schritt D6 durchgerührt;
Schritt D5, der Fernseher sendet das Freisignal an das mobile Endgerät; und
Schritt D6, der Fernseher sendet das Besetztsignal an das mobile Endgerät.

3. Verfahren nach Anspruch 2, wobei der Schritt des Erfassens, ob sich ein Benutzer vor dem Fernseher befindet und fernsieht, Folgendes aufweist: der Fernseher startet ein Benutzererfassungsmodul, sammelt eine Gruppe von Bildern vor dem Fernseher, unterzieht die Gruppe von Bildern einer Nachbearbeitung, und führt eine Gesichtsidentifikation durch, um zu bestimmen, ob sich ein Benutzer vor dem Fernseher befindet und fernsieht, der in der Gruppe von Bildern enthalten ist.

4. Verfahren nach Anspruch 1, wobei der Schritt des Übertragens des entsprechenden Fernsteuerungscodes an eine Vorrichtung, die Echtzeitinhalte durch ein IR-Übertragungsmodul des Fernsehers zur Verfügung stellt, Folgendes aufweist: der Fernseher erhält eine ID der Vorrichtung, die Echtzeitinhalte zur Verfügung stellt, durch ein ID-Identifikationsmodul, löst einen Original-Steuerungscode auf, der dem Fernsteuerungs-Anfragesignal entspricht, das von dem mobilen Endgerät von der ID der Vorrichtung, die Echtzeitinhalte zur Verfügung stellt, gesendet wird, und sendet den Original-Steuerungscode durch das IR-Übertragungsmodul an die Vorrichtung, die Echtzeitinhalte zur Verfügung stellt.

5. Verfahren nach Anspruch 1, wobei der Schritt E3 Folgendes aufweist:
falls das Antwortsignal das Besetztsignal ist, das anzeigt, dass sich zumindest ein Benutzer vor dem Fernseher befindet, der fernsieht, sendet der Fernseher ein Bild eines Benutzers vor dem Fernseher an das Video-Hauptfenster des mobilen Endgeräts, um es anzuzeigen;
das mobile Endgerät sendet das Steuerungsrecht-Anwendungssignal an den Fernseher und wartet auf eine Antwort von dem Fernseher; und
nachdem der Fernseher das Steuerungsrecht-Anwendungssignal empfangen hat, zeigt er ein Auswahlfenster an, das es einem Benutzer ermöglicht, auszuwählen, ob er die Fernsteuerung zulässt; falls sich der Benutzer entscheidet, die Fernsteuerung zuzulassen, sendet der Fernseher das Fernsteuerungs-Zulassungssignal an das mobile Endgerät, und das mobile Endgerät tritt in den freien Fernsteuerungsmodus ein, nachdem es das Fernsteuerungs-Zulassungssignal von dem Fernseher erhalten hat; falls sich der Benutzer entscheidet, die Fernsteuerung nicht zuzulassen, sendet der Fernseher das Fernsteuerungs-Verweigerungssignal an das mobile Endgerät und das mobile Endgerät beendet den gegenwärtigen Fernsteuerungs-Anfragevorgang, nachdem es das Fernsteuerungs-Verweigerungssignal von dem Fernseher erhalten hat.

6. System zum Umsetzen einer verteilten Fernsteuerung, aufweisend einen Fernseher und ein mobiles Endgerät, das eine Netzwerkverbindung mit dem Fernseher bildet; wobei der Fernseher wie folgt konfiguriert ist: er sendet Echtzeit-Inhaltssignale an das mobile Endgerät und überwacht eine Fernsteuerungsanfrage von dem mobilen Endgerät, er empfängt ein Fernsteuerungs-Anfragesignal, das von dem mobilen Endgerät gesendet wurde und sendet in Übereinstimmung mit einer Benutzerantwort und abhängig davon, ob sich ein Benutzer vor dem Fernseher befindet, ein Antwortsignal an das mobile Endgerät, wobei das Antwortsignal eines von einem Verweigerungssignal, einem Freisignal und einem Besetztsignal aufweist, wobei das Verweigerungssignal anzeigt, dass der Fernseher die Fernsteuerungsanfrage direkt zurückweist, das Freisignal anzeigt, dass keine Benutzer fernsehen und das Besetztsignal anzeigt, dass zumindest ein Benutzer fernsieht, er sendet einen Fernsteuerungscode, der der Fernsteuerungsanfrage entspricht, an eine Vorrichtung, die Echtzeitinhalte zur Verfügung stellt, nachdem er das Freisignal an das mobile Endgerät gesendet hat; und er sendet ein Fernsteuerungs-Zulassungssignal oder ein Fernsteuerungs-Verweigerungssignal an das mobile Endgerät, nachdem er ein Steuerungsrecht-Anwendungssignal von dem mobilen Endgerät empfangen hat;
wobei das mobile Endgerät wie folgt konfiguriert ist: es empfängt die Echtzeit-Inhaltssignale, die von dem Fernseher gesendet werden, um ein Echtzeit-Videoprogramm zu empfangen und sendet das Fernsteuerungs-Anfragesignal an den Fernseher; es beendet den gegenwärtigen Fernsteuerungs-Anfragevorgang, nachdem es das Verweigerungssignal empfangen hat; es beendet den gegenwärtigen Fernsteuerungs-Anfragevorgang, nachdem es das Freisignal empfangen hat und tritt in einen freien Fernsteuerungsmodus ein; es sendet das Steuerungsrecht-Anwendungssignal an den Fernseher, nachdem es das Freisignal empfangen hat; es tritt in den freien Fernsteuerungsmodus ein, nachdem es das Fernsteuerungs-Zulassungssignal empfangen hat; und es beendet den gegenwärtigen Fernsteuerungs-Anfragevorgang, nachdem es das Fernsteuerungs-Verweigerungssignal empfangen hat.

7. System nach Anspruch 6, wobei der Fernseher ferner wie folgt konfiguriert ist: er zeigt eine Eingabeaufforderung an, die es einem Benutzer ermöglicht, sich zu entscheiden, ob er die Fernsteuerungsanfrage nach Empfangen des Fernsteuerungs-Anfragesignals von dem mobilen Endgerät zurückweist; er sendet das Verweigerungssignal an das mobile Endgerät, wenn sich der Benutzer entscheidet, die Fernsteuerungsanfrage zurückzuweisen; er erfasst, ob sich zumindest ein Benutzer vor dem Fernseher befindet, wenn sich der Benutzer nicht entscheidet, die Fernsteuerungsanfrage zurückzuweisen, er sendet das Freisignal an das mobile Endgerät, wenn keine fernsehenden Benutzer erfasst werden; er sendet das Besetztsignal an das mobile Endgerät und sendet ein Bild eines Benutzers vor dem Fernseher an ein Video-Hauptfenster des mobilen Endgeräts, um es anzuzeigen, wenn zumindest ein Benutzer erfasst wird, der fernsieht.

8. System nach Anspruch 7, wobei der Fernseher erfasst, ob ein Benutzer fernsieht, der in der Gruppe von Bildern enthalten ist, indem er ein Benutzererfassungsmodul startet, eine Gruppe von Bildern vor dem Fernseher sammelt, die Gruppe von Bildern nachbearbeitet, und eine Gesichtsidentifikation durchführt, um zu bestimmen, ob ein Benutzer fernsieht, der in der Gruppe von Bildern enthalten ist.

9. System nach Anspruch 6, wobei der Fernseher durch das ID-Identifikationsmodul eine ID der Vorrichtung erhält, die Echtzeitinhalte zur Verfügung stellt, er löst den Original-Steuerungscode, der dem Fernsteuerungs-Anfragesignal entspricht, das von dem mobilen Endgerät gesendet wurde, aus der ID der Vorrichtung auf, die Echtzeitinhalte zur Verfügung stellt, und er sendet den Original-Steuerungscode durch ein IR-Übertragungsmodul an die Vorrichtung, die Echtzeitinhalte zur Verfügung stellt.

10. System nach Anspruch 6, wobei der Fernseher ferner so konfiguriert ist, dass er ein Bild eines Benutzers vor dem Fernseher an das Video-Hauptfenster des mobilen Endgeräts sendet, um es anzuzeigen und/oder dass er ein Auswahlfenster anzeigt, das es einem Benutzer erlaubt, sich zu entscheiden, ob er die Fernsteuerung zulassen will, nachdem er ein Steuerungsrecht-Anwendungssignal von dem mobilen Endgerät empfangen hat, und dass er ein Fernsteuerungs-Zulassungssignal oder ein Fernsteuerungs-Verweigerungssignal an das mobile Endgerät sendet, nachdem er in Übereinstimmung mit der Auswahl des Benutzers ein Antwortsignal von dem Auswahlfenster empfangen hat.

11. Fernseher, der Teil des Systems zum Umsetzen einer verteilten Fernsteuerung nach Anspruch 6 ist,
wobei der Fernseher ein Netzwerkverbindungsmodul, ein Überwachungs- und Verarbeitungsmodul, ein IR-Übertragungsmodul, und ein Kodierungsmodul aufweist;
wobei das Netzwerkverbindungsmodul so konfiguriert ist, dass es eine Netzwerkverbindung mit einem mobilen Endgerät herstellt, um Daten mit dem mobilen Endgerät auszutauschen, mit dem Überwachungs- und Verarbeitungsmodul zu kommunizieren, und einen Befehl von dem Überwachungs- und Verarbeitungsmodul zu empfangen und an selbiges zu senden; wobei das Überwachungs- und Verarbeitungsmodul so konfiguriert ist, dass es die Fernsteuerungsanfrage von dem mobilen Endgerät überwacht; dass es, nach dem Empfangen des Fernsteuerungs-Anfragesignals von dem mobilen Endgerät das entsprechende Antwortsignal in Übereinstimmung mit einer Benutzerantwort von dem Fernseher und abhängig davon, ob sich ein Benutzer vor dem Fernseher befindet, erzeugt, und dass es ferner durch das Netzwerkverbindungsmodul das Antwortsignal an das mobile Endgerät sendet, wobei das Antwortsignal eines von dem Verweigerungssignal, dem Freisignal und dem Besetztsignal aufweist; dass es eine freie Fernsteuerungsverbindung mit dem mobilen Endgerät herstellt, wenn keine Benutzer fernsehen und wenn es der Benutzer dem mobilen Endgerät ermöglicht, den Fernseher zu steuern;
wobei das IR-Übertragungsmodul so konfiguriert ist, dass es einen Infrarotcodebefehl an die Vorrichtung sendet, die Echtzeitinhalte zur Verfügung stellt; und
wobei das Kodierungsmodul so konfiguriert ist, dass es Videostreams und Audiostreams, die von der Vorrichtung, die Echtzeitinhalte zur Verfügung stellt, eingespeist wurden, in komprimierte Binärdatenstreams kodiert, um Echtzeitinhaltsignale zu bilden, und so dass es die Echtzeitinhaltsignale dem mobilen Endgerät durch das Netzwerkverbindungsmodul zur Verfügung stellt.

12. Fernseher nach Anspruch 11, wobei das Überwachungs- und Verarbeitungsmodul ferner so konfiguriert ist, dass es eine Eingabeaufforderung anzeigt, die es einem Benutzer ermöglicht, sich zu entscheiden, ob er die Fernsteuerungsanfrage zurückweist, nachdem das Fernsteuerungs-Anfragesignal, das von dem mobilen Endgerät gesendet wurde, empfangen wurde, und dass es ein Auswahlfenster anzeigt, das es dem Benutzer ermöglicht, sich zu entscheiden, ob er die Fernsteuerung zulässt, nachdem das Steuerungsrecht-Anwendungssignal empfangen wurde.

13. Fernseher nach Anspruch 11, wobei der Fernseher ferner ein Benutzererfassungsmodul aufweist; das Erfassungsmodul so konfiguriert ist, dass es eine Gruppe von Bildern vor dem Fernseher sammelt, wenn es von dem Überwachungs- und Verarbeitungsmodul den Befehl empfängt, zu bestimmen, ob ein Benutzer, der fernsieht, in der Gruppe von Bildern gemäß der Gruppe von Bildern enthalten ist, und dass es ein Analyseergebnis an das Überwachungs- und Verarbeitungsmodul ausgibt, besonders wobei der Fernseher ferner ein ID-Identifikationsmodul aufweist; wobei das ID-Identifikationsmodul so konfiguriert ist, dass es eine ID der Vorrichtung erhält, die Echtzeitinhalte zur Verfügung stellt, den Original-Steuercode, der dem Fernsteuerungs-Anfragesignal entspricht, das von dem mobilen Endgerät gesendet wurde, aus der ID der Vorrichtung, die Echtzeitinhalte zur Verfügung stellt, auflöst, und den Original-Steuercode durch das IR-Übertragungsmodul an die Vorrichtung sendet, die Echtzeitinhalte zur Verfügung stellt.

14. Fernseher nach Anspruch 11, wobei der Fernseher ferner ein ID-Identifikationsmodul aufweist und das ID-Identifikationsmodul so konfiguriert ist, dass es eine ID der Vorrichtung erhält, die Echtzeitinhalte zur Verfügung stellt, dass es den Original-Steuercode, der dem Fernsteuerungs-Anfragesignal entspricht, das von dem mobilen Endgerät gesendet wurde, aus der ID der Vorrichtung, die Echtzeitinhalte zur Verfügung stellt, auflöst, und den Original-Steuercode durch das IR-Übertragungsmodul an die Vorrichtung sendet, die Echtzeitinhalte zur Verfügung stellt.

15. Mobiles Endgerät, das Teil des Systems zum Umsetzen einer verteilten Fernsteuerung nach Anspruch 6 ist, wobei das mobile Endgerät ein Netzwerkverbindungsmoduls, ein Dekodierungsmodul, ein Anzeigemodul und ein Fernsteuerungs-Anfragemodul aufweist;
wobei das Netzwerkverbindungsmodul so konfiguriert ist, dass es eine Netzwerkverbindung mit einem Fernseher aufbaut, um mit dem Fernseher Daten auszutauschen, und dass es mit dem Fernsteuerungs-Anfragemodul kommuniziert, um einen Befehl von dem Fernsteuerungs-Anfragemodul zu empfangen, und dass es einen Befehl an das Fernsteuerungs-Anfragemodul sendet;
wobei das Dekodierungsmodul so konfiguriert ist, dass es die von dem Fernseher erhaltenen Videostreams und Audiostreams dekodiert und die dekodierten Videostreams und Audiostreams an das Anzeigemodul sendet, um sie anzuzeigen; wobei das Anzeigemodul so konfiguriert ist, dass es die Videostreams und Audiostreams, die von dem Dekodierungsmodul dekodiert wurden, abspielt oder anzeigt;
wobei das Fernsteuerungs-Anfragemodul so konfiguriert ist, dass es das Fernsteuerungs-Anfragesignal an den Fernseher sendet, nachdem es das Echtzeit-Videoprogramm des Fernsehers empfangen hat; den gegenwärtigen Fernsteuerungs-Anfragevorgang beendet, nachdem es das Verweigerungssignal von dem Fernseher empfangen hat; den gegenwärtigen Fernsteuerungs-Anfragevorgang beendet und eine freie Fernsteuerungsverbindung mit dem Fernseher aufbaut, nachdem es das Freisignal empfangen hat; das Steuerungsrecht-Anwendungssignal an den Fernseher sendet, nachdem es das Besetztsignal empfangen hat; die freie Fernsteuerungsverbindung mit dem Fernseher aufbaut, nachdem es das Fernsteuerungs-Zulassungssignal empfangen hat; und den gegenwärtigen Fernsteuerungs-Anfragevorgang beendet, nachdem es das Fernsteuerungs-Verweigerungssignal empfangen hat.

## Revendications

1. Procédé pour réaliser une commande à distance, comprenant les étapes suivantes :
étape A, une télévision construisant une connexion réseau avec un terminal mobile ;
étape B, la télévision envoyant des signaux de contenu en temps réel au terminal mobile et contrôlant une demande de commande à distance provenant du terminal mobile ;
étape C, le terminal mobile recevant les signaux de contenu en temps réel envoyés depuis la télévision afin d'obtenir un programme vidéo en temps réel depuis la télévision, et envoyant un signal de demande de commande à distance à la télévision ;
étape D, la télévision recevant le signal de demande de commande à distance envoyé depuis le terminal mobile et envoyant un signal de réponse correspondant selon une réponse utilisateur provenant de la télévision et selon qu'il y a ou non un utilisateur devant la télévision, dans lequel le signal de réponse comprend l'un parmi un signal refus, un signal libre et un signal occupé ; et
étape E, le terminal mobile recevant le signal de réponse provenant de la télévision et effectuant une étape suivante correspondante selon un type du signal de réponse ;
étape E1, si le signal de réponse est le signal refus qui indique que la télévision refuse la demande de commande à distance directement, le terminal mobile mettant fin au processus de demande de commande à distance en cours ;
étape E2, si le signal de réponse est le signal libre qui indique qu'aucun utilisateur ne regarde la télévision, la télévision envoyant un code de commande à distance correspondant à la demande de commande à distance à un dispositif fournissant un contenu en temps réel par le biais d'un module de transmission IR de la télévision, mettant fin au processus de demande de commande à distance en cours puis entrant dans un mode commande à distance libre ; et
étape E3, si le signal de réponse est le signal occupé qui indique qu'il y a au moins un utilisateur regardant la télévision, le terminal mobile envoyant un signal d'application de droit de commande à la télévision ; si la télévision envoyant un signal de permission de commande à distance au terminal mobile, le terminal mobile entrant dans le mode commande à distance libre ; si la télévision envoyant le signal de refus de commande à distance au terminal mobile, le terminal mobile mettant fin au processus de demande de commande à distance en cours.

2. Procédé selon la revendication 1, dans lequel l'étape D comprend les étapes suivantes :
étape D1, la télévision recevant le signal de demande de commande à distance envoyé depuis le terminal mobile ;
étape D2, la télévision sortant une boîte de dialogue permettant à un utilisateur de choisir s'il refuse la demande de commande à distance, si l'utilisateur choisit de refuser la demande de commande à distance, réalisant l'étape D3, si l'utilisateur ne choisit pas de refuser la demande de commande à distance, réalisant l'étape D4 ;
étape D3, la télévision envoyant le signal refus au terminal mobile ;
étape D4, la télévision détectant s'il y a un utilisateur devant la télévision regardant la télévision, si aucun utilisateur n'est détecté comme regardant la télévision, réalisant l'étape D5, s'il y a au moins un utilisateur détecté comme regardant la télévision, réalisant l'étape D6 ;
étape D5, la télévision envoyant le signal libre au terminal mobile ;
et
étape D6, la télévision envoyant le signal occupé au terminal mobile.

3. Procédé selon la revendication 2, dans lequel l'étape consistant à détecter s'il y a un utilisateur devant la télévision regardant la télévision comprend : la télévision démarrant un module de détection d'utilisateur, collectant un groupe d'images devant la télévision, post-traitant le groupe d'images et effectuant une identification de visage pour déterminer si un utilisateur regarde la télévision dans le groupe d'images.

4. Procédé selon la revendication 1, dans lequel l'étape consistant à transmettre un code de commande à distance correspondant à un dispositif fournissant un contenu en temps réel par l'intermédiaire d'un module de transmission IR de la télévision comprend : la télévision obtenant un ID du dispositif fournissant un contenu en temps réel par l'intermédiaire d'un module d'identification d'ID, résolvant un code original de commande correspondant au signal de demande de commande à distance envoyé par le terminal mobile à partir de l'ID du dispositif fournissant un contenu en temps réel, et envoyant le code original de commande au dispositif fournissant un contenu en temps réel par l'intermédiaire du module de transmission IR.

5. Procédé selon la revendication 1, dans lequel l'étape E3 comprend :
si le signal de réponse est le signal occupé qui indique qu'il y a au moins un utilisateur devant la télévision regardant la télévision, la télévision envoyant une image d'un utilisateur devant la télévision à la fenêtre principale de vidéo du terminal mobile pour affichage ;
le terminal mobile envoyant le signal d'application de droit de commande à la télévision et attendant une réponse provenant de la télévision ; et
après avoir reçu le signal d'application de droit de commande, la télévision sortant une boîte de sélection permettant à un utilisateur de choisir s'il permet la commande à distance ; si l'utilisateur choisit de permettre la commande à distance, la télévision envoyant le signal de permission de commande à distance au terminal mobile, et le terminal mobile entrant dans le mode commande à distance libre après avoir obtenu le signal de permission de commande à distance provenant de la télévision ; si l'utilisateur choisit de ne pas permettre la commande à distance, la télévision envoyant le signal de refus de commande à distance au terminal mobile et le terminal mobile mettant fin au processus de demande de commande à distance en cours après avoir obtenu le signal de refus de commande à distance provenant de la télévision.

6. Système pour réaliser une commande à distance répartie, comprenant une télévision et un terminal mobile construisant une connexion réseau avec la télévision ;
la télévision est configurée pour : envoyer des signaux de contenu en temps réel au terminal mobile et contrôler une demande de commande à distance provenant du terminal mobile ; recevoir un signal de demande de commande à distance envoyé depuis le terminal mobile et envoyer un signal de réponse au terminal mobile selon une réponse utilisateur et selon qu'il y a ou non un utilisateur devant la télévision, dans lequel le signal de réponse comprend l'un parmi un signal refus, un signal libre et un signal occupé ; dans lequel le signal refus indique que la télévision refuse la demande de commande à distance directement, le signal libre indique qu'aucun utilisateur ne regarde la télévision et le signal occupé indique qu'il y a au moins un utilisateur regardant la télévision ; envoyer un code de commande à distance correspondant à la demande de commande à distance à un dispositif fournissant un contenu en temps réel après l'envoi du signal libre au terminal mobile ; et envoyer un signal de permission de commande à distance ou un signal de refus de commande à distance au terminal mobile après la réception d'un signal d'application de droit de commande provenant du terminal mobile ;
le terminal mobile est configuré pour : recevoir les signaux de contenu en temps réel envoyés depuis la télévision afin d'obtenir un programme vidéo en temps réel et envoyer le signal de demande de commande à distance à la télévision ; mettre fin au processus de demande de commande à distance en cours après la réception du signal refus ; mettre fin au processus de demande de commande à distance en cours après la réception du signal libre et entrer dans un mode commande à distance libre ; envoyer le signal d'application de droit de commande à la télévision après réception du signal libre ; entrer dans le mode commande à distance libre après la réception du signal de permission de commande à distance ; et mettre fin au processus de demande de commande à distance en cours après réception du signal de refus de commande à distance.

7. Système selon la revendication 6, dans lequel la télévision est en outre configurée pour : sortir une boîte de dialogue permettant à un utilisateur de choisir s'il refuse la demande de commande à distance après réception du signal de demande de commande à distance provenant du terminal mobile ; envoyer le signal refus au terminal mobile quand l'utilisateur choisit de refuser la demande de commande à distance ; détecter s'il y a au moins un utilisateur devant la télévision quand l'utilisateur ne choisit pas de refuser la demande de commande à distance, envoyer le signal libre au terminal mobile quand aucun utilisateur n'est détecté comme regardant la télévision ; envoyer le signal occupé au terminal mobile et envoyer une image d'un utilisateur devant la télévision à une fenêtre principale de vidéo du terminal mobile pour affichage quand au moins un utilisateur est détecté comme regardant la télévision.

8. Système selon la revendication 7, dans lequel la télévision détecte s'il y a un utilisateur dans le groupe d'images regardant la télévision en démarrant un module de détection d'utilisateur, collectant un groupe d'images devant la télévision, post-traitant le groupe d'images, et effectuant une identification de visage pour déterminer si un utilisateur regarde la télévision dans le groupe d'images.

9. Système selon la revendication 6, dans lequel la télévision obtient un ID du dispositif fournissant un contenu en temps réel par l'intermédiaire du module d'identification d'ID, résout un code original de commande correspondant au signal de demande de commande à distance envoyé par le terminal mobile à partir de l'ID du dispositif fournissant un contenu en temps réel, et envoie le code original de commande au dispositif fournissant un contenu en temps réel par l'intermédiaire d'un module de transmission IR.

10. Système selon la revendication 6, dans lequel la télévision est en outre configurée pour envoyer une image d'un utilisateur devant la télévision à la fenêtre principale de vidéo du terminal mobile pour affichage et/ou pour sortir une boîte de sélection permettant à un utilisateur de choisir s'il permet la commande à distance après réception d'un signal d'application de droit de commande provenant du terminal mobile, et envoyer un signal de permission de commande à distance ou un signal de refus de commande à distance au terminal mobile après réception d'un signal de réponse provenant de la boîte de sélection selon la sélection de l'utilisateur.

11. Télévision adaptée dans le système pour réaliser une commande à distance répartie selon la revendication 6, dans laquelle la télévision comprend un module de connexion réseau, un module de contrôle et de traitement, un module de transmission IR et un module de codage ;
le module de connexion réseau est configuré pour construire une connexion réseau avec un terminal mobile pour échanger des données avec le terminal mobile, communiquer avec le module de contrôle et de traitement, et recevoir et envoyer une instruction depuis le module de contrôle et de traitement ;
le module de contrôle et de traitement est configuré pour contrôler la demande de commande à distance provenant du terminal mobile ; après la réception du signal de demande de commande à distance provenant du terminal mobile, générer le signal de réponse correspondant selon une réponse utilisateur provenant de la télévision et selon qu'il y a ou non un utilisateur devant la télévision, et envoyer en outre le signal de réponse au terminal mobile par l'intermédiaire du module de connexion réseau, dans lequel le signal de réponse comprend l'un parmi un signal refus, un signal libre et un signal occupé ; construire une connexion de commande à distance libre avec le terminal mobile quand aucun utilisateur ne regarde la télévision et quand l'utilisateur permet au terminal mobile de commander la télévision ;
le module de transmission IR est configuré pour envoyer une instruction de code infrarouge au dispositif fournissant un contenu en temps réel ; et
le module de codage est configuré pour coder des flux vidéo et des flux audio entrés par le dispositif fournissant un contenu en temps réel à des flux de données binaires compressées pour former des signaux de contenu en temps réel, et fournir les signaux de contenu en temps réel au terminal mobile par l'intermédiaire du module de connexion réseau.

12. Télévision selon la revendication 11, dans lequel le module de contrôle et de traitement est en outre configuré pour sortir une boîte de dialogue permettant à un utilisateur de choisir s'il refuse la demande de commande à distance après réception du signal de demande de commande à distance envoyé depuis le terminal mobile, et pour sortir une boîte de sélection permettant à un utilisateur de choisir s'il permet la commande à distance après réception du signal d'application de droit de commande.

13. Télévision selon la revendication 11, dans lequel la télévision comprend en outre un module de détection d'utilisateur ; le module de détection est configuré pour collecter un groupe d'images devant la télévision lors de la réception de l'instruction provenant du module de contrôle et de traitement, déterminer s'il y a un utilisateur regardant la télévision dans le groupe d'images selon le groupe d'images, et sortir un résultat d'analyse sur le module de contrôle et de traitement, en particulier dans lequel la télévision comprend en outre un module d'identification d'ID ; le module d'identification d'ID est configuré pour obtenir un ID du dispositif fournissant un contenu en temps réel, résoudre le code original de commande correspondant au signal de demande de commande à distance envoyé par le terminal mobile à partir de l'ID du dispositif fournissant un contenu en temps réel, et envoyer le code original de commande au dispositif fournissant un contenu en temps réel par l'intermédiaire du module de transmission IR.

14. Télévision selon la revendication 11, dans lequel la télévision comprend en outre un module d'identification d'ID, le module d'identification d'ID est configuré pour obtenir un ID du dispositif fournissant un contenu en temps réel, résoudre un code original de commande correspondant au signal de demande de commande à distance envoyé par le terminal mobile à partir de l'ID du dispositif fournissant un contenu en temps réel, et envoyer le code original de commande au dispositif fournissant un contenu en temps réel par l'intermédiaire du module de transmission IR.

15. Terminal mobile adapté dans le système pour réaliser une commande à distance répartie selon la revendication 6, dans
lequel le terminal mobile comprend un module de connexion réseau, un module de décodage, un module d'affichage et un module de demande de commande à distance ;
le module de connexion réseau est configuré pour construire une connexion réseau avec une télévision afin d'échanger des données avec la télévision, et communiquer avec le module de demande de commande à distance afin de recevoir une instruction provenant du module de demande de commande à distance et d'envoyer une instruction au module de demande de commande à distance ;
le module de décodage est configuré pour décoder les flux vidéo et flux audio obtenus à partir de la télévision, et envoyer les flux vidéo et flux audio décodés au module d'affichage pour affichage ; le module d'affichage est configuré pour lire ou afficher les flux vidéo et flux audio décodés par le module de décodage ;
le module de demande de commande à distance est configuré pour envoyer le signal de demande de commande à distance à la télévision après obtention du programme vidéo en temps réel de la télévision ; mettre fin au processus de demande de commande à distance en cours après réception du signal refus provenant de la télévision ; mettre fin au processus de demande de commande à distance en cours et construire une connexion de commande à distance libre avec la télévision après réception du signal libre ; envoyer le signal d'application de droit de commande à la télévision après réception du signal occupé ; construire la connexion de commande à distance libre avec la télévision après réception du signal de permission de commande à distance ; et mettre fin au processus de demande de commande à distance en cours après réception du signal de refus de commande à distance.
